# EUROPEAN PATENT APPLICATION

(11) **EP 2 424 276 A2**
(43) Date of publication of application: **29.02.2012**
(21) Application number: 11176498.1
(22) Date of filing: 03.08.2011
(51) Int. Cl.: H04R 25/00

(54) **Audio transmission device for cooperation with a hearing device comprising a telecoil for use in an elevator**

(30) Priority: 27.08.2010 NL 2005283
(71) Applicant: STML Holding B.V., 7532 SK Enschede (NL)
(72) Inventor: Lasscher, Dimitri, 7511 ZK Enschede (NL); Nicholl, Timothy Edgar, Edinburgh, Central Scotland EH13 19NH (GB)
(74) Representative: Mink-Lindenburg, Charlotte Hildegard

(57) **Abstract**

The invention relates to an audio transmission device intended for co-action with a hearing aid provided with a loop listener for application in a lift for the purpose of converting a first audio signal originating from one or more audio sources in the lift, including the lift communication system, to a magnetic field suitable for receiving on the hearing aid, comprising a power supply connection, a first audio input connection intended for the purpose of receiving the first audio signal, an induction loop amplifier intended for the purpose of amplifying the first audio signal and a loop antenna which is coupled to the induction loop amplifier and intended for the purpose of generating the magnetic field.

## Description

The present invention relates to an audio transmission device intended for co-action with a hearing aid provided with a loop listener for application in a lift for the purpose of converting a first audio signal originating from one or more audio sources in the lift, including the lift communication system, to a magnetic field suitable for receiving on the hearing aid, comprising a power supply connection, a first audio input connection intended for the purpose of receiving the first audio signal, an induction loop amplifier intended for the purpose of amplifying the first audio signal and a loop antenna which is coupled to the induction loop amplifier and intended for the purpose of generating the magnetic field.

There is a great need to make buildings better accessible to people with a hearing problem. It is the desire to be able to reach this group of people in the case of for instance a calamity in a lift. It is however a known problem that a hearing aid does not function optimally in a small closed space such as a lift. The audio transmission device according to the preamble provides a solution herefor by providing an audio transmission device for a lift with which communication can take place with users of a lift who have a hearing aid. Interaction is hereby possible with these users, for instance during a calamity. The audio transmission device makes use here of the fact that most hearing aids are equipped with a loop listener which can convert a magnetic field to sound. For this purpose the hearing aid has to be set to the T or MT position.

Such an audio transmission device is known in the field and is described in the American patent application US 2008/0170713. The known audio transmission device is installed particularly in existing lift systems. The known audio transmission device has the drawback that the loop antenna has to be arranged on the roof, under the floor or in the lift control panel. Since the space available for the loop antenna varies for different lifts, the fitting of the loop antenna of the known audio transmission device therefore requires an approach modified to the situation. The fitting of the known audio transmission device is hereby time-consuming and the lift is therefore out of use for an unacceptably long time.

An audio transmission device for application in a lift which requires less complicated assembly is described in the Japanese patent application JP 2009/124363. This system has to be installed in a recess on the surface of the wall of the lift cage. In many cases however, this recess is not desirable.

Another known audio transmission device is described in the Japanese patent application JP 2005/303601. This is a portable audio system which is however not suitable for application in a lift.

The audio transmission device according to the invention has for its object to provide an audio transmission device according to the preamble which obviates the above stated drawback. The audio transmission device according to the invention has for this purpose the feature that the loop antenna and the induction loop amplifier are comprised in one housing and that the loop antenna comprises the induction loop amplifier. Assembly of the audio transmission device has hereby become much simpler compared to the known audio transmission device, since the audio transmission device comprises only one housing. Because the loop antenna comprises the induction loop amplifier, the size of the housing is reduced to a minimum. In addition to mounting the housing on the lift, the installer of the audio transmission device need in principle only connect the power supply connection and connect the first audio signal of the lift to the first audio input connection. The lift downtime is hereby reduced to a minimum. The housing is preferably hand-sized so that finding a mounting location in the lift will not cause any problems. The loop antenna is consequently also small. It has however been found in practice that, despite the small dimensions of the loop antenna, a range of 1.5 metre around the loop antenna can be covered.

In a first preferred embodiment the audio transmission device is provided with a microphone and a mixer device for mixing the microphone signal with the first audio signal to form a first mixed audio signal, and wherein the induction loop amplifier amplifies the first mixed audio signal. The microphone is arranged in the housing, wherein the housing has to be mounted such that the voice of the user with the hearing aid can be clearly received by the audio transmission device. The user with a hearing aid can hereby hear him/herself speaking.

In a second preferred embodiment the audio transmission device is provided with a second audio input connection intended for receiving a second audio signal, and wherein the mixer device is suitable for mixing the first mixed audio signal with the second audio signal to form a second mixed audio signal, and wherein the induction loop amplifier amplifies the second mixed audio signal. The audio transmission device can hereby also be connected for instance to a public address system.

In a most preferred embodiment of the audio transmission device according to the invention the housing comprises a contact surface which is adapted to lie against an outer side of lift cage in the placed situation of the device, wherein the loops of the loop antenna run substantially parallel to the contact surface and the loop antenna and induction loop amplifier are adapted to generate a magnetic field which is able to penetrate the side of the lift cage. No modifications are now necessary to the lift cage during installation of the device.

The loop antenna preferably comprises 2 to 58 windings, whereby the audio signal provided by the induction loop amplifier is optimally converted to a magnetic field and a range of 1.5 metre around the loop antenna is possible. The thickness of the side of the lift cage and the material of every type of lift are known, and the loop antenna can be adapted thereto. By varying the number of windings an optimum field strength of the magnetic field can be obtained which is such that the magnetic field penetrates the side of the lift cage.

The invention also relates to a method for adapting an audio transmission device according to the invention to a lift system, comprising the steps of:
a) determining the thickness of the side of the lift cage of the lift system,
b) determining the material of the side of the lift cage of the lift system,
c) determining the number of loops of the loop antenna on the basis of the thickness and/or the material of the side of the lift cage of the lift system.

The number of loops can be theoretically calculated or determined experimentally. The number of loops is chosen such that an optimum field strength is achieved within the lift cage.

In addition, the amplification factor of the induction loop amplifier can be adapted to the number of loops of the loop antenna.

The audio transmission device will be further elucidated with reference to the figures, in which
Figure 1 shows the first preferred embodiment of the audio transmission device according to the invention;
Figure 2 shows schematically the operation of the audio transmission device according to the invention;
Figure 3A shows the magnetic field lines of a loop antenna which is not suitable for application in the audio transmission device according to the invention;
Figure 3B shows the magnetic field lines of a loop antenna which is suitable for application in the audio transmission device according to the invention.

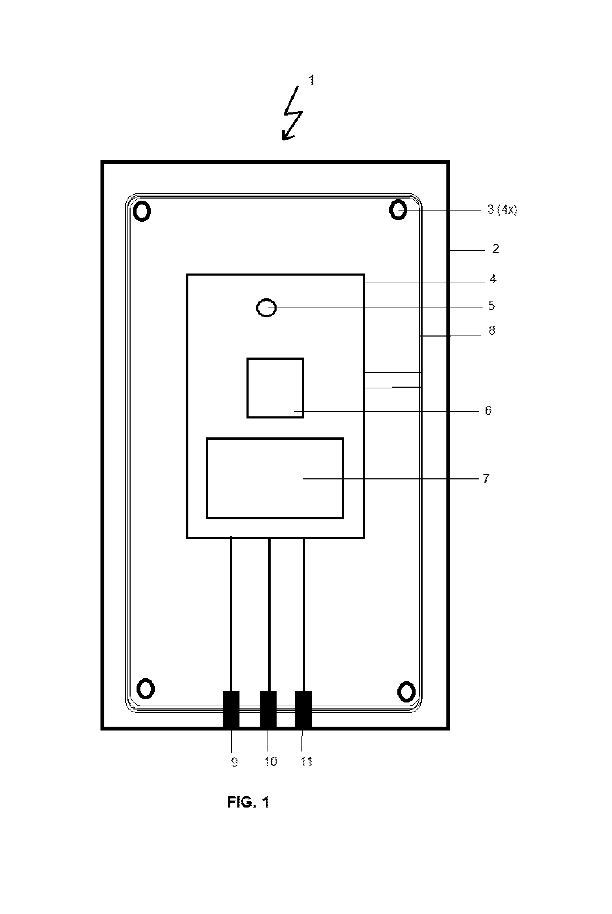

Figure 1 shows the first preferred embodiment of the audio transmission device 1 according to the invention. The audio transmission device 1 is wholly enclosed by housing 2, the cover of which is not drawn. Housing 2 preferably has a hand-sized format, whereby finding a location for installation thereof causes the fewest possible problems. During fitting of audio transmission device 1 the housing is connected to the lift by means of screws in screw openings 3. The audio transmission device 1 is provided with electronic means 4 which are preferably accommodated in one printed circuit board (PCB). The electronic means 4 comprise a microphone 5, a mixer device 6 for mixing/superimposing a plurality of input audio signals to form one mixed audio signal and an induction loop amplifier 7 which feeds the mixed audio signal to a loop antenna 8. The loop antenna is arranged around the edges of the housing and on the inner side thereof. The electronic means 4 are provided with a power supply connection 9, a first audio signal connection 10 for connection to the audio installation of the lift, a second audio signal connection 11 for connection to a public address system or an external microphone, which for practical reasons are connected to housing 2. Mixer device 6 is able to mix/superimpose the electrical audio signals originating from microphone 5, first audio signal connection 10 and second audio signal connection 11 to form one mixed audio signal. Additional signal processing techniques can be applied here, such as noise filtering and echo suppression.

It will be apparent to the skilled person that fitting of the audio transmission device 1 in a lift will not cause any problems and that the lift downtime is limited to a minimum.

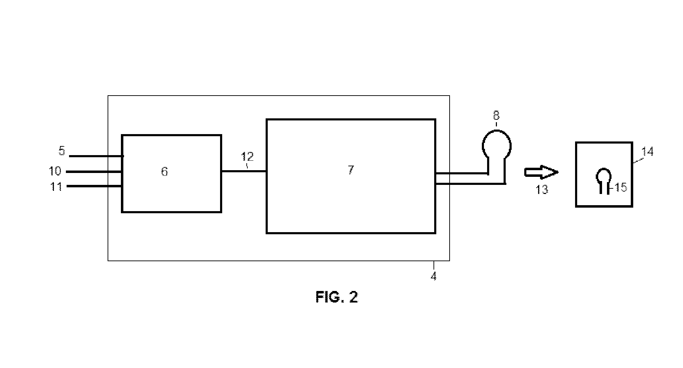

Figure 2 shows schematically the operation of the audio transmission device 1 according to the invention. The electronic means 4 are formed by mixer device 6 and induction loop amplifier 7 which are connected to each other. Mixer device 6 receives electrical audio signals via microphone 5, first audio signal connection 10 and second audio signal connection 11. Mixer device 6 mixes these signals to form one mixed audio signal 12 which is then fed to induction loop amplifier 7. Induction loop amplifier 7 amplifies the audio signal 12 and feeds the amplified signal to loop antenna 8. Loop antenna 8 converts the amplified signal to a magnetic field 13. A hearing aid 14 provided with loop listener 15 is able to convert the magnetic field 13 to sound which is formed by mixed audio signal 12.

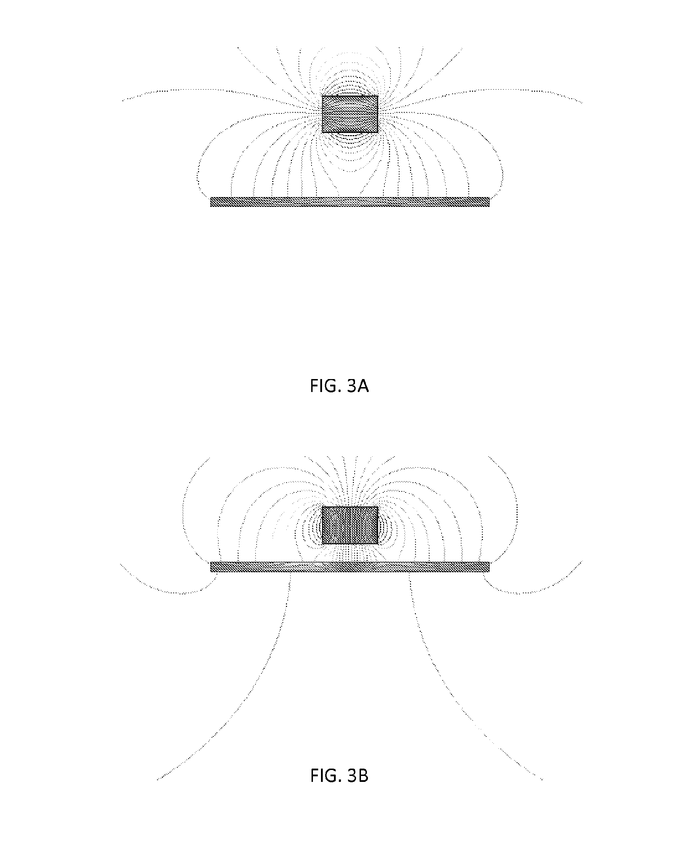

Figure 3A shows the magnetic field lines of a loop antenna which is not suitable for application in the audio transmission device according to the invention. Drawn in the figure are magnetic field lines which cannot penetrate the side of the lift cage.

Figure 3B shows the magnetic field lines of a loop antenna which is suitable for application in the audio transmission device according to the invention. By concentrating the magnetic field by means of increasing the number of loops in the loop antenna and placing the device at a minimum distance from the side of the lift cage, the magnetic field lines can extend beyond the side of the lift cage. A part of the signal will be lost but, by increasing the number of loops, the desired level of field strength in the lift cage can be obtained.

The invention is of course not limited to the described and shown preferred embodiments but extends to any embodiment falling within the scope of protection as defined in the claims as seen in the light of the foregoing description and accompanying drawings.

## Claims

1. Audio transmission device intended for co-action with a hearing aid provided with a loop listener for application in a lift for the purpose of converting a first audio signal originating from one or more audio sources in the lift, including the lift communication system, to a magnetic field suitable for receiving on the hearing aid, comprising a power supply connection, a first audio input connection intended for the purpose of receiving the first audio signal, an induction loop amplifier intended for the purpose of amplifying the first audio signal and a loop antenna which is coupled to the induction loop amplifier and intended for the purpose of generating the magnetic field, **characterized in that** the loop antenna and the induction loop amplifier are comprised in one housing and that the loop antenna comprises the induction loop amplifier.

2. Audio transmission device as claimed in claim 1, **characterized in that** the housing has a hand-sized format.

3. Audio transmission device as claimed in claim 1 or 2, **characterized in that** the device is also provided with a microphone and a mixer device for mixing the microphone signal with the first audio signal to form a first mixed audio signal, and wherein the induction loop amplifier amplifies the first mixed signal.

4. Audio transmission device as claimed in claim 3, **characterized in that** the device is provided with a second audio input connection intended for receiving a second audio signal, and wherein the mixer device is suitable for mixing the first mixed audio signal with the second audio signal to form a second mixed audio signal, and wherein the induction loop amplifier amplifies the second mixed audio signal.

5. Audio transmission device as claimed in any of the foregoing claims, **characterized in that** the housing comprises a contact surface which is adapted to lie against an outer side of lift cage in the placed situation of the device, wherein the loops of the loop antenna run substantially parallel to the contact surface and the loop antenna and induction loop amplifier are adapted to generate a magnetic field which is able to penetrate the side of the lift cage.

6. Audio transmission device as claimed in any of the foregoing claims, **characterized in that** the loop antenna comprises 2 to 58 windings.

7. Method for adapting an audio transmission device as claimed in claims 5 and 6 to a lift system, comprising the steps of:
a) determining the thickness of the side of the lift cage of the lift system,
b) determining the material of the side of the lift cage of the lift system,
c) determining the number of loops of the loop antenna on the basis of the thickness and/or the material of the side of the lift cage of the lift system.

8. Method as claimed in claim 7, further comprising the step of:
d) adjusting the amplification factor of the induction loop amplifier to the number of loops of the loop antenna.
